# EUROPÄISCHE PATENTSCHRIFT

(11) **EP 1 495 809 B1**
(45) Veröffentlichungstag und Bekanntmachung des Hinweises auf die Patenterteilung: **21.09.2011**
(21) Anmeldenummer: 04012756.5
(22) Anmeldetag: 28.05.2004
(51) Int. Cl.: B01L 3/00

(54) **Einwegkassette mit integriertem Behälter der durch ein Spike geöffnet wird**
Disposable cassette with integrated container having a spike for opening
Cassette jetable avec un récipient intégré ouvrable avec une aiguille

(30) Priorität: 08.07.2003 DE 10330803
(43) Veröffentlichungstag der Anmeldung: 12.01.2005
(73) Patentinhaber: Fresenius Medical Care Deutschland GmbH, 61352 Bad Homburg v.d.H. (DE)
(72) Erfinder: Lapp, Uwe, 35510 Butzbach (DE); Frey, Stephan, 60433 Frankfurt (DE)
(74) Vertreter: Laufhütte, Dieter

(56) Entgegenhaltungen:
- US-A- 4 978 502
- US-A- 5 284 570
- US-A- 5 665 315

## Beschreibung

Die Erfindung betrifft eine Einwegkassette nach dem Oberbegriff des Anspruchs 1.

In medizinischen Geräten kommen häufig Kunststoff-Einmalartikel mit fluidführenden Kanälen zum Einsatz. Als Alternative zu herkömmlichen Schlauchsystemen haben sich hier entsprechende Kassettensystem bewährt. In diesen Kassettensystemen sind die entsprechenden Fluidwege gebildet. Das durch die Fluidwege fließende Fluid wird mittels entsprechender Aktoren eingeführt. So sind beispielsweise Ventile eingesetzt, über die die Fluidwege durchgeschaltet oder verschlossen werden. Zum anderen sind in derartigen Kassettensystemen Pumpen zur Förderung des Fluids integriert. Im Bereich der medizinischen Anwendung sind bereits Einmalkassettensysteme bekannt, bei denen ein starrer Teil vorgesehen ist, in welchem Kanäle in Kammern eingelassen sind. Dieser starre Teil wird durch eine durchgehend flexible Folie abgedeckt. Gemäß der DE 102 39 597 wird diese flexible Folie durch flexibel ausgebildete Bereiche im starren Teil gebildet, wobei die starren und flexiblen Bereiche unter Verwendung einer Zweikomponentenspritzgusstechnologie einstückig herstellbar sind.

Die vorgenannten Kassettensysteme lassen sich auch im Bereich der Analysentechnik vorteilhaft anwenden.

Die zur Analyse notwendigen Flüssigkeiten, beispielsweise Kalibrierflüssigkeit, muss nach dem Stand der Technik zum sterilen Anschluss mittels teurer eigens hierfür vorgesehener Zugangsadapter angeschlossen werden. Derartige Zugangsadapter ergeben sich beispielsweise aus der US-Patentschrift 6,016,683, der US 6,136,607 A oder der EP 1 243 336 A2.

Aus US 5 096 669 ist eine Einwegkassette mit in der Kassette integrierten Fluidwegen bekannt, wobei in der Einwegkassette einen Beutel mit einer Kalibrierflüssigkeit flüssigkeitsdicht integriert ist und wobei an der Einwegkassette ein integrierter Pin vorgesehen ist, über den der Beutel geöffnet werden kann, so daß die Flüssigkeit in die Fluidwege der Einwegkassette leitbar ist. Hierbei liegt der Beutel lose in einer Wanne, von der die Fluidwege abgehen. Zum Öffnen wird der Beutel gegen einen Pin gedrückt, wodurch sich die Flüssigkeit aus dem Beutel in die Wanne ergießt.

Aufgabe der Erfindung ist es, eine Einwegkassette an die Hand zu geben, bei der auf einfache Weise der sterile Zugang zu einer Flüssigkeit, vorzugsweise der Kalibrierflüssigkeit, ermöglicht wird, ohne dass spezielle Zugangsadapter hierfür vorzusehen sind, wobei die austretende Flüssigkeit auch bei Mehrfachmessungen gezielt in die Fluidwege überführt werden kann.

Erfindungsgemäß wird die Aufgabe durch die Kombination der Merkmale des Anspruchs 1 gelöst. Demnach wird in der Einwegkassette mindestens ein Behälter mit einer Flüssigkeit, beispielsweise der Kalibrierflüssigkeit, flüssigkeitsdicht integriert. Gleichzeitig ist an der Einwegkassette ein vorzugsweise als schwenkbarer Kipphaken ausgebildeter Spike vorgesehen, über den der Beutel geöffnet werden kann, so dass die Flüssigkeit in die Fluidwege der Einwegkassette leitbar ist, wobei der Behälter über einen gezielt zu öffnenden Eingabebereich fest mit den Fluidwegen verbunden ist.

Besondere Vorteile der Erfindung ergeben sich aus den sich an den Hauptanspruch anschließenden Unteransprüchen.

Demnach kann der Bereich des Kipphakens in der Einwegkassette mit einer Folie abgedeckt sein und der Bereich des Kipphakens ist vorzugsweise ringförmig mit einem Dichtsteg unter Freilassung eines einmündenden Fluidwegs umgeben. Damit ist nach Durchtrennen der einen Folienwand mittels des Kipphakens gewährleistet, dass die austretende Flüssigkeit ohne Leckage in den einmündenden Fluidweg überführt wird.

Vorzugsweise kann der Behälter als Beutel aus einer Aluminiumverbundfolie ausgebildet sein.

Der Beutel kann im Bereich des Kipphakens auf der vom Kipphaken wegweisenden Seite mindestens eine tiefgezogene Kalotte in der Folienwand aufweisen, die es gewährleistet, dass die Folie in der diese Kalotte vorgesehen ist, beim Einschwenken des Kipphakens nicht beschädigt wird. Anstelle des zuvor beschriebenen einschwenkbaren Kipphakens kann jegliche andere Ausbildung eines Spikes zum Öffnen der Folienwand dienen.

Der Kipphaken ist vorzugsweise einstückig mit der Einwegkassette ausgebildet. Bei der Einwegkassette handelt es sich um ein Kunststoffspritzgussteil und der Kipphaken kann verschwenkbar an diesem Kunststoffspritzgussteil angeformt sein, so dass er mittels eines maschinellen Stößels derart verschwenkbar ist, dass er eine Seite des entsprechend in der Einwegkassette eingelegten Beutels aufschneidet. Vorteilhaft kann der Kipphaken einen Fluidkanal derart in Form einer Rinne besitzen, dass eine mögliche Okklusion des freien Flusses verhindert wird.

Gemäß eines weiteren Aspekts betrifft die Erfindung ein Verfahren zur Bereitstellung eines sterilen Zuganges für einen in einer Einwegkassette nach der vorliegenden Erfindung eingesetzten Beutel. Demnach ist der mit Flüssigkeit gefüllte Beutel vollständig versiegelt mit der Einwegkassette verbunden. Eine Wand des Beutels wird zum Öffnen des Beutelzugangs mittels des zugeordneten Kipphakens aufgeschnitten, ohne die gegenüberliegende als tiefgezogene Kalotte ausgebildete Wand des Beutels zu beschädigen.

Das System hat den Vorteil, dass der Beutel vor dem entsprechenden Aufschneiden durch den Kipphaken vollständig versiegelt ist und keinerlei Durchbrüche in der Folienwand aufweist. Auf diese Weise wird die Lagerungsfähigkeit einer empfindlichen Flüssigkeit wie beispielsweise einer Kalibrierflüssigkeit verbessert.

Einzelheiten und Vorteile der Erfindung ergeben sich aus einem in der Zeichnung dargestellten Ausführungsbeispiel. Es zeigen:
- Fig. 1:: die Draufsicht auf eine Einwegkassette gemäß einer Ausführungsform der vorliegenden Erfindung,
- Fig. 2:: einen Schnitt entsprechend der Schnittlinie II - II durch Fig. 1,
- Fig. 3:: einen Schnitt entsprechend der Schnittlinie III - III durch Fig. 1,
- Fig. 4:: einen Beutel zum Einsatz in eine Einwegkassette gemäß Fig. 1 in Draufsicht und
- Fig. 5:: einen Schnitt entsprechend der Schnittlinie V - V durch Fig. 4.

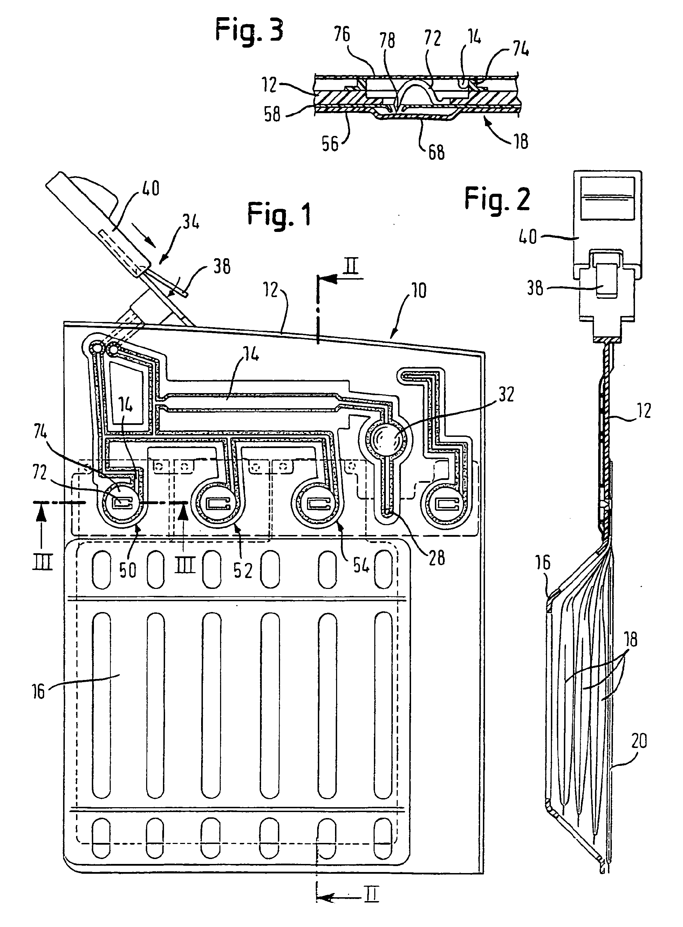

In der in den Fig. 1 und 2 dargestellten Einwegkassette 10 ist zum Zwecke der Fluidführung in einem ersten Teil 12, das als Kunststoffspritzgussteil ausgeführt ist, eine Kanalstruktur 14 ausgebildet, welche mittels flexiblen Elastomermaterials entsprechend der DE 102 39 597 der gleichen Anmelderin in bekannter Art und Weise abgedeckt sind. Das Kunststoffspritzgussteil 12 weist einen schalenförmig vertieften Bereich 16 auf, in welchem 3 Beutel mit Kalibrierflüssigkeit 18 und ein Abfallbeutel 20 liegen. Die mit Kalibrierflüssigkeit versehenen Beutel 18, die in ungebrauchtem Zustand der Einwegkassette 10 verschlossen sind, sind über gezielt zu öffnende Eingabebereiche mit Kanälen 14 verbunden. Der Abfallbeutel 20 ist bei 28 ebenfalls mit den Kanälen verbunden. Im Kanalsystem 14 sind eine Reihe von Aktoren in Form von hier nicht näher dargestellten Ventilen bzw. einer Pumpe 32 vorhanden. Bei den Ventilen bzw. der Pumpe 32 sind jeweils flexible Kunststoffschichten vorgesehen, die über hier nicht näher dargestellte maschinenseitige Stößel betätigbar sind. Zur näheren Funktion kann auf die DE 102 39 597 verwiesen werden. Durch entsprechende Steuerung der Ventile 30 bzw. der Pumpe 32 kann Flüssigkeit im Kanalsystem 14 gezielt gefördert werden.

Zur Eingabe einer Probenflüssigkeit, beispielsweise Vollblut, Serum oder Urin, ist eine Probenport 34 vorhanden.

Der Probenport 34 ist über einen Schieber 40, der mit einer Kunststoffklappe 38 zusammenwirkt, verschließbar. Nach Einfüllen der Probe und Schließen der Kunststoffklappe 38 kann durch Einleiten von Spülflüssigkeit der gesamte Probenport gespült werden.

Durch dieses Spülen kann eine alte Blutprobe oder eine alte Kalibrierlösung durch frische Kalibrierlösung ersetzt werden. Die in ihrem Aufbau und ihrer Funktion dargestellte Einwegkassette 10 wird in das hier nicht näher dargestellte Analysengerät eingelegt und dicht verpresst. Üblicherweise werden die Einwegkassetten für eine Nutzungsdauer von 24 Stunden oder ca. 30 Messungen konzipiert. Die notwendige Kalibrierlösung wird den entsprechenden Beuteln 18 entnommen. Diese Beutel sind vor der Messung flüssigkeitsdicht in der Einwegkassette integriert, d. h. sie liegen in dem schalenförmig vertieften Bereich 16 des Kunststoffspritzgussteils 12 in der in Fig. 2 dargestellten Art und Weise übereinander. Die Beutel 18 sind im Bereich 50, 52 bzw. 54 jeweils mit dem Kunststoffspritzgussteil 12 fest verbunden.

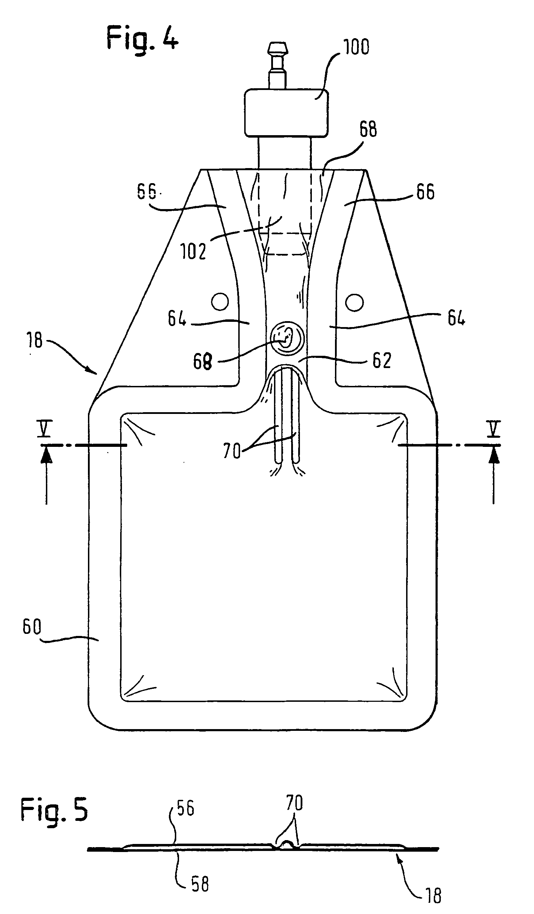

Der Aufbau eines Beutels 18 ergibt sich aus den Fig. 4 und 5. Der Beutel 18 besteht jeweils aus einer oberen und einer unteren Lage aus einer Aluminiumverbundfolie 56 bzw. 58, die entlang eine Schweißlinie 60 derart miteinander verschweißt sind, dass sie einen Öffnungsbereich 62 freilassen. Der Öffnungsbereich ist durch zwei zunächst parallel zueinander verlaufende Schweißnähte 64 definiert, die zum äußeren Ende des Beutels 18 sich als konische Schweißlinien 66 unter Bildung eines konischen Öffnungsbereichs 68 voneinander wegbewegen. Eine Folienhälfte weist eine tiefgezogene Kalotte 68 auf. Zusätzlich ist im Öffnungsbereich 62 ein Bereich von parallel zueinander verlaufenden tiefgezogenen Kanälen 70 verwirklicht, die eine Verstärkung des Beutels und damit einen Knickschutz bewirken.

In Fig. 4 wird der Beutel 18 während des Befüllens gezeigt. Nach Befüllen und Abschweißen der Öffnung wird der Beutel mit dem als Kunststoffspritzgussteil ausgeführten ersten Teil 12 der Einwegkassette 10 fest verbunden, vorzugsweise verklebt. In Fig. 3 ist eine Schnittdarstellung des Bereichs gezeigt, in welchem gezeigt ist, dass an dem Kunststoffspritzgussteil 12 der aus den Schichten 56 und 58 bestehende Beutel 18 angeklebt ist. Dabei ist die in der Folie 56 tiefgezogene Kalotte 68 an einer Stelle positioniert, in welcher im Bereich des Kunststoffspritzgussteils 12 ein schwenkbar angeformter Kipphaken 72 angeordnet ist. Wie insbesondere in der Fig. 3 zu sehen ist um den Kipphaken herum eine Dichtlippe 74 angeordnet, die mittels einer flexiblen Kunststoffschicht 76 nach oben hin dichtend abgedeckt ist. An einer Seite mündet ein Fluidkanal 14 ein.

Zum Öffnen des Beutels 18 wird der Kipphaken 72 über einen hier nicht näher dargestellten maschinenseitigen Betätigungsstößel verschwenkt, so dass die scharfe Spitze 78 des Kipphakens 72 die Folie 58 des Beutels 18 durchtrennt bzw. aufschneidet, wie dies in Fig. 3 dargestellt ist. Die Folie 56 des Beutels 18 wird aufgrund der tiefgezogenen Kalotte 68 nicht beschädigt. Die innerhalb des Beutels 18 enthaltene Kalibrierflüssigkeit fließt nun durch die so geschaffene Öffnung in den ringförmig vom Dichtsteg 74 umschlossenen Raum ein und kann so in den Kanal 14 geleitet werden. Ein entsprechender Unterdruck im Kanalsystem 14 kann über die Pumpe 32 aufgebaut werden.

Auf diese Weise kann in sehr einfacher Art und Weise ein steriler Zugang zu einem Folienbeutel geschaffen werden. Die hier anhand eines Einwegkassettensystems, das als auswechselbarer Bestandteil eines Analysengeräts vorgeschlagen ist, offenbarte Erfindung kann auch im Rahmen eines anderen Systems, in dem es um die Problemstellung eines sterilen Zugangs zu einer in einem Folienbeutel abgefüllten Flüssigkeit geht, verwendet werden, ohne den Rahmen der Erfindung zu verlassen.

## Patentansprüche

1. Einwegkassette (10) mit in der Kassette integrierten Fluidwegen (14), wobei in der Einwegkassette (10) mindestens ein Behälter (18) mit einer Flüssigkeit, beispielsweise einer Kalibrierflüssigkeit, flüssigkeitsdicht integriert ist und wobei an der Einwegkassette (10) ein integrierter Spike (72) vorgesehen ist, über den der Behälter geöffnet werden kann, so daß die Flüssigkeit in die Fluidwege (14) der Einwegkassette (10) leitbar ist,
**dadurch gekennzeichnet,**
**daß** der mindestens eine Behälter (18) über einen gezielt zu öffnenden Eingabebereich (50, 52, 54) fest mit den Fluidwegen (14) verbunden ist, so daß die aus dem Behälter (18) austretende Flüssigkeit nach Durchtrennen einer Folienwand des Behälters (18) mittels des integrierten Spikes (72) ohne Leckage in die Fluidwege (14) überführt wird, und daß der Behälter (18) im Bereich des Spikes (72) auf der vom Spike (72) wegweisenden Seite eine tiefgezogene Kalotte (68) in der Folienwand (56) aufweist.

2. Einwegkassette nach Anspruch 1, **dadurch gekennzeichnet, daß** der gezielt zu öffnende Eingabebereich (50, 52, 54) mit einem von einem Dichtsteg (74) umgebenen Bereich der Einwegkassette (10) verbunden ist, der mit einer Folie (56) fluiddicht abgedeckt ist, den Spike (72) enthält und in den ein Fluidkanal (14) einmündet.

3. Einwegkassette nach Anspruch 1 oder 2, **dadurch gekennzeichnet, daß** der Behälter (18) ein flexibler Beutel aus einer Aluminiumverbundfolie ist.

4. Einwegkassette nach Anspruch 1 oder 2, **dadurch gekennzeichnet, daß** der integrierte Spike (72) aus einem an der Einwegkassette (10) angelenktem Kipphaken besteht.

5. Einwegkassette nach Anspruch 4, **dadurch gekennzeichnet, daß** der Kipphaken (72) einen Fluidkanal derart in Form einer Rinne besitzt, daß eine mögliche Okklusion des freien Flusses verhindert wird.

6. Einwegkassette nach einem der Ansprüche 1 bis 5, **dadurch gekennzeichnet, daß** der mindestens eine Spike (72) einstückig mit der Einwegkassette ausgebildet ist.

7. Einwegkassette nach einem der Ansprüche 1 bis 6, **dadurch gekennzeichnet, daß** die Einwegkassette (10) ein auswechselbarer Bestandteil eines Analysengerätes ist.

8. Verfahren zur Bereitstellung eines sterilen Zuganges für einen in einer Einwegkassette nach Anspruch 5 eingesetzten Behälter (18), **dadurch gekennzeichnet, daß** der mit Flüssigkeit gefüllte Behälter (18) vollständig versiegelt mit der Einwegkassette (10) verbunden wird und daß eine Wand (58) des Behälters (18)
zum Öffnen des Behälterzuganges mittels des zugeordneten Spikes (72) aufgeschnitten wird, ohne die gegenüberliegende als tiefgezogene Kalotte (68) ausgebildete Wand (56) des Behälters zu beschädigen.

## Claims

1. A disposable cassette (10) comprising fluid paths (14) integrated in the cassette, wherein at least one container (18) with a liquid, for example a calibration fluid, is integrated in the disposable cassette (10) in a liquid-tight manner and wherein an integrated spike (72) is provided at the disposable cassette (10) and the container can be opened via said spike such that the liquid can be guided into the fluid paths (14) of the disposable cassette (10),
**characterised in that**
the at least one container (18) is fixedly connected to the fluid paths (14) via an input region (50, 52, 54) to be opened directly so that the liquid leaving the container (18) is transferred without leakage into the fluid paths (14) after cutting through a film wall of the container (18) by means of the integrated spike (72); and **in that** the container (18) has a deep-drawn spherical arrangement (68) in the film wall (56) in the region of the spike (72) on the side facing away from the spike (72).

2. A disposable cassette in accordance with claim 1, **characterised in that** the input region (50, 52, 54) to be opened directly is connected to a region of the disposable cassette (10) surrounded by a sealing web (74), said region being covered in a fluid-tight manner by a film (56), including the spike (72) and opening into a fluid passage (14).

3. A disposable cassette in accordance with either of claims 1 or 2, **characterised in that** the container (18) is a flexible pouch of an aluminium multilayer film.

4. A disposable cassette in accordance with either of claims 1 or 2, **characterised in that** the integrated spike (72) comprises a rocker hook pivotally connected to the disposable cassette (10).

5. A disposable cassette in accordance with claim 4, **characterised in that** the rocker hook (72) has a fluid passage in the form of a channel such that a possible occlusion of the free flow is prevented.

6. A disposable cassette in accordance with one of the claims 1 to 5, **characterized in that** the at least one spike (72) is made in one piece with the disposable cassette.

7. A disposable cassette in accordance with any one of the claims 1 to 6, **characterised in that** the disposable cassette (10) is a replaceable component of an analysis instrument.

8. A method of providing a sterile access for a container (18) inserted into a disposable cassette in accordance with claim 5, **characterised in that** the container (18) filled with liquid is connected to the disposable cassette (10) in a completely sealed manner; and **in that** a wall (58) of the container (18) is cut open by means of the associated spike (72) to open the container access without damaging the opposite wall (56) of the container formed as a deep-drawn spherical arrangement (68).

## Revendications

1. Cassette jetable (10) avec des trajectoires de fluides (14) intégrées dans la cassette, au moins un réservoir (18) étant intégré de manière imperméable dans la cassette jetable (10) avec un liquide, par exemple un liquide de calibrage, et une pointe intégrée (72) étant prévue sur la cassette jetable (10), par l'intermédiaire de laquelle le réservoir peut être ouvert, de sorte que le liquide soit conductible dans les trajectoires de fluides (14) de la cassette jetable (10),
**caractérisée en ce que**
au moins un réservoir (18) est relié, via une zone d'admission à ouvrir de manière ciblée (50, 52, 54), de manière fixe avec les trajectoires de fluides (14), de sorte que le liquide sortant du réservoir (18), après avoir percé une paroi en film du réservoir (18) à l'aide de la pointe intégrée (72), est transporté sans fuite dans les trajectoires de fluides (14), et **en ce que** le réservoir (18) présente une calotte emboutie (68) dans la zone de la pointe (72) sur le côté opposé à la pointe (72) dans la paroi en film (56).

2. Cassette jetable selon la revendication 1, **caractérisée en ce que** la zone d'admission à ouvrir de manière ciblée (50, 52, 54) est reliée avec une zone de la cassette jetable (10) entourée d'une barrette d'étanchéité (74), qui est couverte de manière imperméable par un film (56), comporte la pointe (72), et aboutit dans ledit canal de fluide (14).

3. Cassette jetable selon la revendication 1 ou 2, **caractérisée en ce que** le réservoir (18) est un sachet flexible en feuille multicouche d'aluminium.

4. Cassette jetable selon la revendication 1 ou 2, **caractérisée en ce que** la pointe intégrée (72) se compose d'un crochet basculant articulé sur la cassette jetable (10).

5. Cassette jetable selon la revendication 4, **caractérisée en ce que** le crochet basculant (72) possède un canal de fluide en forme de conduit, de sorte qu'une occlusion possible de l'écoulement libre soit empêchée.

6. Cassette jetable selon une quelconque des revendications 1 à 5, **caractérisée en ce qu'**au moins la pointe (72) est construite en une pièce avec la cassette jetable.

7. Cassette jetable selon une quelconque des revendications 1 à 6, **caractérisée en ce que** la cassette jetable (10) est un composant remplaçable d'un appareil d'analyse.

8. Procédé destiné à la mise à disposition d'un accès stérile pour un réservoir (18) inséré dans une cassette jetable selon la revendication 5, **caractérisé en ce que** le réservoir (18) rempli de liquide est relié de manière complètement colmatée avec la cassette jetable (10) et **en ce qu'**une paroi (58) du réservoir (18) est ouverte par coupure à l'aide de la pointe affectée (72) afin d'ouvrir l'accès du réservoir, sans endommager la paroi (56) du réservoir située face à face et construite en calotte emboutie (68).
